(19) **Europäisches Patentamt**

**European Patent Office**

**Office européen des brevets**

(11) **EP 1 184 997 A1**

(12) **DEMANDE DE BREVET EUROPEEN**

(43) Date de publication:
06.03.2002 Bulletin 2002/10

(51) Int Cl.⁷: **H04B 1/707**

(21) Numéro de dépôt: 01402235.4

(22) Date de dépôt: 27.08.2001

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **29.08.2000 FR 0011250**

(71) Demandeur: **Mitsubishi Electric Information Technology Centre Europe B.V.**
**1101 AG Amsterdam Zuidoost (NL)**

(72) Inventeur: **Brunel Loic, Mitsubishi Electricite**
**35700 Rennes (FR)**

(74) Mandataire: **Maillet, Alain**
**Cabinet le Guen & Maillet, 5, Place Newquay, B.P. 70250**
**35802 Dinard Cedex (FR)**

(54) **Méthode de détection multi-utilisateur**

(57) Méthode de détection multi-utilisateur avec élimination d'interférence entre utilisateurs, chaque utilisateur transmettant des données modulées sous forme de symboles sur un canal de transmission, chaque canal de transmission (*k*) comprenant au moins un trajet de propagation (*p*) et chaque trajet de propagation arrivant sur un réseau d'antennes (ℓ) de réception selon une direction d'arrivée $\theta_{p,k}$, la méthode comprenant au moins une séquence d'étapes pour chaque utilisateur, chaque séquence comprenant :

(a) une étape d'estimation du signal transmis ($500_k$, $600_k$,$700_k$,$800_k$,$900_k$,$900$,$1000$) par l'utilisateur à partir des signaux d'antennes, ladite étape effectuant une estimation ($530_p$) de la direction d'arrivée ($\theta_{p,k}$) et de caractéristiques ($\alpha_{p,k}$,$\nu_{p,k}$) de propagation de chaque trajet (*p*) du canal de transmission (*k*) à partir desdits signaux ;

(b) une étape d'estimation des données transmises ($610_k$,$710_k$,$810_k$,$910_k$,$910$,$1010$) par l'utilisateur à partir de ladite estimation du signal transmis ;

(c) une étape d'estimation de la contribution ($670_k$, $770_k$,$870_k$,$970_k$,$970$,$1070$) de l'utilisateur aux signaux reçus par les différentes antennes à partir des données estimées à l'étape (b) et de la direction d'arrivée ainsi que les caractéristiques de propagation estimées à l'étape (a) ;

(d) une étape d'élimination d'interférence ($680_{k'}$, $780_k$,$880_{k'}$,$980_{k'}$,$980$,$1080$) soustrayant aux signaux d'antennes la contribution estimée à l'étape (c) pour obtenir des signaux d'antennes épurés ;les signaux d'antennes épurés fournis par au moins une première séquence étant utilisés comme signaux d'antennes par au moins une seconde séquence.

FIG.6

Printed by Jouve, 75001 PARIS (FR)

**Description**

La présente invention concerne de manière générale une méthode de détection multi-utilisateur (Multi User Detection ou MUD). Plus précisément, la présente invention a trait à une méthode itérative d'élimination de l'interférence entre utilisateurs (Multiple Access Interference ou MAI). La présente invention s'applique plus particulièrement à la téléphonie mobile en mode DS-CDMA (Direct Sequence - Code Division Multiple Access) c'est-à-dire à la téléphonie mobile utilisant un mode d'accès à répartition par codes avec étalement spectral par séquences directes.

Dans un système de téléphonie mobile DS-CDMA, la séparation des différents utilisateurs se fait en multipliant chaque symbole de l'utilisateur par une séquence d'étalement qui lui est propre, encore appelée pour cette raison signature de l'utilisateur, les différentes signatures étant idéalement choisies orthogonales. La fréquence de séquence d'étalement (chip rate) étant supérieure à la fréquence des symboles, le signal transmis par chaque utilisateur est distribué (ou étalé) dans l'espace des fréquences. A la réception, la séparation du signal d'un utilisateur est réalisée grâce à un filtrage adapté à la signature correspondante. Ce filtrage est également appelé « désétalement » (despreading). Le rapport entre la bande occupée par le signal étalé et la bande occupée par le signal d'information est appelé facteur d'étalement.

Les signatures employées doivent présenter des bonnes propriétés de corrélation à savoir un pic d'auto-corrélation très prononcé et de faibles valeurs d'inter-corrélation.

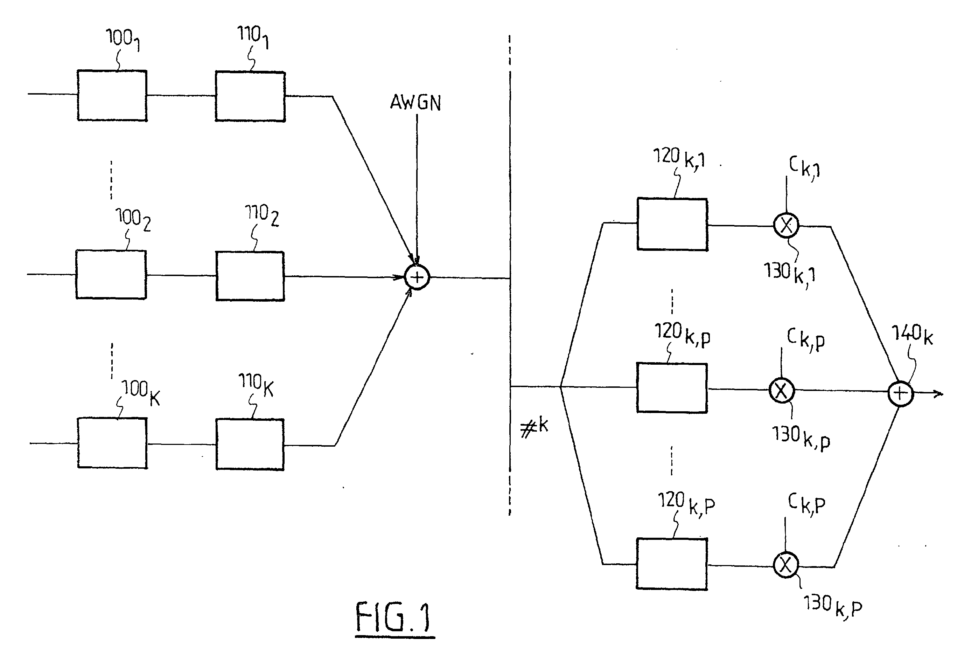

La première de ces deux caractéristiques permet la synchronisation de la séquence reçue. Elle est très utile lorsque le canal de transmission d'un utilisateur comporte plusieurs trajets de propagation. En effet, chaque trajet peut alors être isolé grâce à un filtrage adapté à la signature et au retard du trajet. On peut tirer parti de la diversité de propagation au sein du canal pour augmenter le rapport signal à bruit en réception. Pour ce faire, on utilise un banc de filtres adaptés séparant les différents trajets et on en combine les sorties. La combinaison la plus répandue est le MRC (*Maximum Ratio Combining),* qui consiste à multiplier le signal en sortie de chaque filtre adapté par le conjugué du coefficient multiplicatif complexe introduit par le canal sur le trajet concerné. L'opération de filtrage résultante est un filtrage adapté au filtre équivalent du canal. De par sa structure, le récepteur ainsi constitué est appelé récepteur en râteau ou récepteur Rake. Bien entendu, la séparation parfaite des trajets n'a lieu que si l'auto-corrélation est un Dirac. Dans la pratique cependant, la séparation n'est pas complète et laisse subsister une interférence multi-trajet que l'on appelle encore bruit propre (*Self noise).* La Fig. 1 représente de manière schématique un système DS-CDMA avec $K$ utilisateurs. Les données d'un utilisateur k sont étalées en fréquence par la signature correspondante dans le module $100_k$ avant d'être transmises sur un canal $110_k$ comportant $P$ trajets. A la réception, pour un utilisateur k donné, les signaux s'étant propagés selon les différents trajets p=1..P du canal sont séparés par des filtres adaptés $120_{k,1}$... $120_{k,P}$ (seule la batterie de filtres de l'utilisateur k a été représentée) avant d'être pondérés par un jeu de coefficients complexes $c_{k,p}$. Les signaux ainsi pondérés sont sommés ($140_k$) et la somme résultante en sortie du récepteur Rake est ultérieurement détectée pour fournir une estimation des données de l'utilisateur k. Dans le cas d'une liaison descendante (liaisons d'une station de base vers un terminal mobile) les canaux 1 à $K$ sont identiques alors qu'ils diffèrent dans la liaison montante (liaisons de terminaux mobiles vers la station de base). Le premier cas peut, de ce point de vue, être considéré comme un cas particulier du second.

La seconde caractéristique énoncée plus haut garantit un faible niveau d'interférence entre deux utilisateurs distincts. Néanmoins, là aussi, en pratique, l'inter-corrélation entre deux signatures est rarement nulle. Cela est notamment le cas en situation dite d'éblouissement (*Near-far effect)* où un signal de forte puissance reçu d'un utilisateur perturbe la réception d'un signal de faible puissance provenant d'un autre utilisateur. D'autre part, lorsque le nombre d'utilisateurs est élevé, proche du facteur d'étalement, la somme des interférences des différents utilisateurs, faibles si on les prend isolément, peut avoir des effets très perturbateurs pour la détection.

Pour combattre l'interférence multi-utilisateur, plusieurs méthodes ont été proposées. On en trouvera une revue dans l'article de Simon Moshavi intitulé « Multiuser detection for DS-CDMA communications» paru dans IEEE Communications Magazine, Oct. 96, pages 124-136. Parmi les techniques multi-utilisateur existantes, les techniques d'élimination soustractive (Substractive Interference Cancellation) présentent de bonnes performances pour une complexité de mise en oeuvre raisonnable. L'idée générale en est simple : à partir d'une première détection en sortie de filtre adapté, on reconstruit par ré-étalement les contributions à l'interférence subie par les autres utilisateurs. On soustrait ensuite cette interférence au signal reçu pour fournir un signal épuré à une étape de détection ultérieure. Selon la manière dont la soustraction est effectuée, on distingue l'élimination parallèle (PIC pour *Parallel Interférence Cancellation*) et l'élimination série des interférences (SIC pour *Serial Interférence Cancellation*).

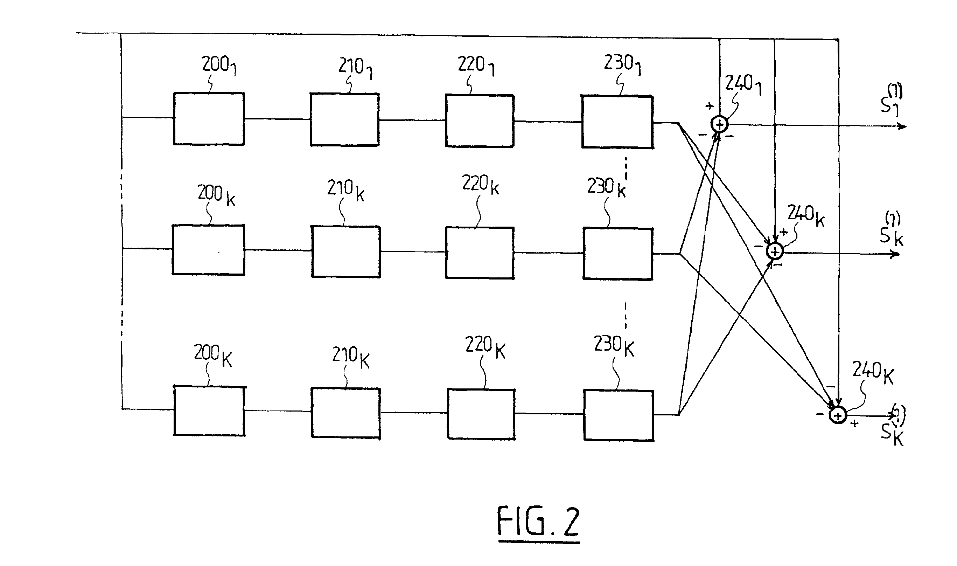

La méthode d'élimination parallèle est illustrée en Fig. 2: le signal reçu est filtré par une batterie de filtres adaptés ($200_1,200_2,..,200_K$), chaque filtre adapté étant relatif à un utilisateur donné. Après détection ($210_k$), les symboles estimés sont réétalés ($220_k$) spectralement au moyen de la signature de l'utilisateur en question avant d'être filtrés par un filtre modélisant le canal de transmission ($230_k$). On dispose ainsi en sortie de ($230_k$) d'une estimation de la part contributive du signal reçu attribuable à l'utilisateur k. On soustrait (en ($240_k$)) du signal reçu la somme des parts contributives des autres utilisateurs pour obtenir un signal épuré $S_k^{(1)}$. Ce signal épuré peut directement faire l'objet d'une détection après désétalement ou bien le processus d'élimination peut être itéré. La détection étant de meilleure qualité à chaque itération, on obtient alors, au fil des itérations successives, des signaux $S_k^{(i)}$ de mieux en mieux débarrassés de l'interférence multi-utilisateur.

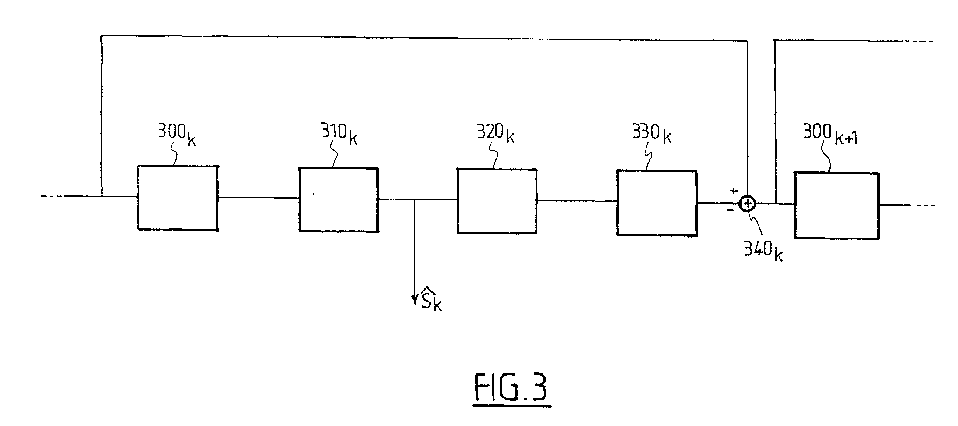

La méthode d'élimination série est illustrée en Fig. 3 : les signaux reçus par les différents utilisateurs sont tout d'abord ordonnés par ordre de puissance décroissante, soit 1,..,K. On procède alors par éliminations successives des parts contributives en commençant par le signal de plus forte puissance. A cette fin, le détecteur SIC comporte une série d'étages en cascade, chacun éliminant l'interférence due à un utilisateur particulier. Le premier étage travaille sur le signal d'antenne et chaque étage ultérieur reçoit en entrée la sortie de l'étage précédent. Chaque étage comporte un filtre adapté ($300_k$), un détecteur ($310_k$), un module ($320_k$) de réétalement des symboles, un filtre ($330_k$) modélisant le canal de transmission k et un soustracteur ($340_k$) éliminant la contribution due à l'utilisateur k. Chaque étage fournit également en sortie du détecteur ($310_k$) une décision sur le symbole reçu, $S_k$ et le processus d'élimination d'interférence prend fin au $K^{ième}$ étage.

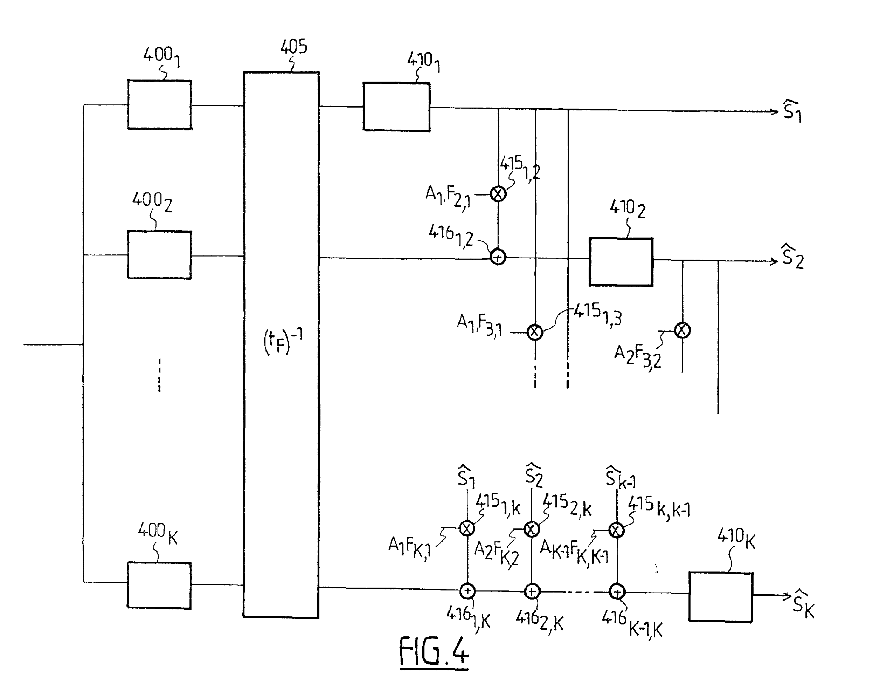

Une autre méthode d'élimination série est la détection par forçage à zéro à retour de décision (ZF-DF pour Zero-Forcing Decision-Feedback). Selon cette méthode illustrée en Fig. 4, le signal reçu est filtré et recombiné par une batterie de filtres adaptés ($400_1$,.., $400_K$) avant de subir un traitement linéaire (405) consistant en une multiplication par la matrice $(F^T)^{-1}$ où F est la matrice triangulaire inférieure obtenue par décomposition de Cholesky de la matrice de corrélation R des signatures des différents utilisateurs ($R=F^T.F$). Le traitement matriciel a pour effet de partiellement décorréler les signaux des différents utilisateurs. Les signaux ainsi partiellement décorrélés sont ensuite soumis à une élimination série, après avoir été classés par ordre décroissant d'amplitude, soit $A_1$,.., $A_K$. Le détecteur comporte une pluralité d'étages, chaque étage i comprenant un détecteur ($410_i$) dont la sortie est multipliée par des multiplieurs ($415_{i,i+1}$),...,($415_{i,K}$) pour fournir des produits $A_i.F_{k,i}$ avec i<k, où $F_{k,i}$ est un élément de la matrice F. En entrée de chaque étage (k) on soustrait ($416_{i,k}$) la somme $\sum_{i=1}^{k-1} A_i.F_{k,i} s_i$ où $s_i$ est le symbole estimé pour l'utilisateur i, c'est-à-dire la somme des contributions des utilisateurs précédents i<k. La décision ($410_k$) relative au symbole transmis par l'utilisateur k est prise sur le signal ainsi épuré. On obtient en progressant d'étage en étage les symboles estimés $s_k$ des différents utilisateurs.

Les techniques exposées ci-dessus s'appliquent bien à la situation simple où le canal de transmission d'un utilisateur comporte un seul trajet. Dans ce cas, le filtre modélisant le canal peut se limiter à la multiplication par un coefficient complexe. Lorsque les canaux sont multi-trajet, la situation est en revanche beaucoup plus complexe car il faut procéder à la fois à l'élimination de l'interférence multi-trajet et de l'interférence multi-utilisateur. Un détecteur itératif à élimination soustractive de l'interférence multi-utilisateur en présence de trajets multiples a été proposé dans un article de M.C. Reed et al. intitulé « Iterative Multiuser detection using antenna arrays and FEC on multipath channels » publié dans IEEE Journal on Selected Areas in Communications, Vol. 17, N°12, Dec.'99, pages 2082-2089. Chaque itération de la détection comprend un filtrage adapté, une formation de voies et une combinaison de type Rake. La méthode proposée présuppose cependant que l'on détermine les coefficients d'atténuation, les rotations de phase ainsi que les directions d'arrivée de tous les trajets de tous les utilisateurs. Cette détermination peut être effectuée par exemple en corrélant des symboles pilotes émis par les différents utilisateurs dans des filtres adaptés. Cependant cette détermination est souvent imprécise, ce qui se traduit par une élimination imparfaite voire erronée de l'interférence multi-utilisateur.

Un but de la présente invention est de proposer une méthode et un dispositif de détection qui améliorent l'élimination de l'interférence multi-utilisateur en présence de canaux multi-trajet. Un but subsidiaire de la présente invention est la détermination simple et précise des coefficients d'atténuation et des rotations de phase relatifs aux trajets des canaux de transmission des différents utilisateurs.

L'invention est définie par une méthode de détection multi-utilisateur avec élimination d'interférence entre utilisateurs, chaque utilisateur transmettant des données modulées sous forme de symboles sur un canal de transmission, chaque canal de transmission ($k$) comprenant au moins un trajet de propagation ($p$) et chaque trajet de propagation arrivant sur un réseau d'antennes ($\ell$) de réception selon une direction d'arrivée $\theta_{p,k}$, la méthode comprenant au moins une séquence d'étapes pour chaque utilisateur, chaque séquence comprenant elle-même :

(a) une étape d'estimation du signal transmis par l'utilisateur à partir des signaux d'antennes, ladite étape effectuant une estimation de la direction d'arrivée ($\theta_{p,k}$) et de caractéristiques ($\alpha_{p,k}, \nu_{p,k}$) de propagation de chaque trajet ($p$) du canal de transmission ($k$) à partir desdits signaux ;

(b) une étape d'estimation des données transmises par l'utilisateur à partir de ladite estimation du signal transmis ;

(c) une étape d'estimation de la contribution de l'utilisateur aux signaux reçus par les différentes antennes à partir des données estimées à l'étape (b) et de la direction d'arrivée ainsi que les caractéristiques de propagation estimées à l'étape (a) ;

(d) une étape d'élimination d'interférence soustrayant aux signaux d'antennes la contribution estimée à l'étape (c) pour obtenir des signaux d'antennes épurés ;les signaux d'antennes épurés fournis par au moins une première séquence étant utilisés comme signaux d'antennes par au moins une seconde séquence.

Selon un premier mode de réalisation, pour un utilisateur donné k, l'interférence est éliminée en soustrayant aux signaux d'antennes les contributions de tous les autres utilisateurs.

Selon un second mode de réalisation, les utilisateurs sont classés par ordre de puissance reçue et l'interférence est éliminée en soustrayant l'une après l'autre les contributions des différents utilisateurs en commençant par les utilisateurs de plus fortes puissances reçues.

Avantageusement, pour chaque utilisateur k, ladite séquence comprend après l'étape d'estimation desdites données, une étape de désentrelacement suivie d'une étape de décodage canal et de codage canal et d'une étape d'entrelacement desdites données.

Selon une caractéristique de l'invention, pour chaque utilisateur k, ladite séquence comprend préalablement à l'étape d'estimation de la contribution de l'utilisateur aux signaux reçus, une étape de modulation et de réétalement spectral au moyen de la signature ayant servi à étaler spectralement les symboles dudit utilisateur.

Selon un mode de réalisation de l'invention, les estimations des signaux transmis des utilisateurs étant considérées comme un vecteur d'estimations à K composantes où K est le nombre d'utilisateurs, ledit vecteur est soumis à un filtrage matriciel transverse avant l'étape de décision .

Selon une variante de ce mode de réalisation, les données estimées et remodulées des utilisateurs étant considérées comme un vecteur de symboles à K composantes, ledit vecteur de symboles est soumis à un filtrage matriciel postcurseur et la sortie de ce filtrage est soustraite, vecteur à vecteur, à la sortie du filtrage matriciel transverse.

Alternativement, les symboles issus de l'étape de modulation étant considérés comme un vecteur de symboles à K composantes, ledit vecteur de symboles est soumis à un filtrage matriciel postcurseur et la sortie de ce filtrage est soustraite, vecteur à vecteur, à la sortie du filtrage matriciel transverse .

Selon un exemple de réalisation de l'invention, les estimations des signaux transmis par les différents utilisateurs sont soumises à une multiplication matricielle par une matrice $(F^T)^{-1}$ avant l'étape d'estimation des données, où $F^T$ est la transposée de la matrice triangulaire inférieure F obtenue par décomposition de Cholesky de la matrice de corrélation des signatures ayant servi à étaler spectralement les symboles desdits utilisateurs, l'interférence étant éliminée, pour un utilisateur k donné, dans une première phase, en soustrayant de la $k^{ième}$ composante du produit matriciel la somme $\sum_{i=1}^{k-1} A_i.F_{k,i}.s_i$ où $A_i$ est l'amplitude du signal transmis par l'utilisateur i, $s_i$ est le symbole obtenu par remodulation des données estimées de l'utilisateur i et $F_{k,i}$ le (k,i) ième élément de la matrice F, l'estimation des données transmises par l'utilisateur k étant effectuée à partir de la $k^{ième}$ composante après ladite soustraction et, dans une seconde phase, en soustrayant aux signaux reçus par les différentes antennes, la somme des contributions de tous les autres utilisateurs.

Avantageusement, pour chaque utilisateur k, l'étape d'estimation du signal transmis par l'utilisateur, sur le canal de transmission (k), comprend une formation de voies dans les directions d'arrivée des différents trajets de propagation (p) dudit canal.

En outre, la formation de voie pour un trajet de propagation d'un canal de transmission peut placer des zéros dans les directions d'arrivée des autres trajets de propagation du même canal de transmission.

La formation de voie $(520_{p,k})$ pour un trajet de propagation (p) d'un canal de transmission (k) peut encore placer des zéros dans les directions d'arrivée de tous les trajets de propagation des autres canaux de transmission.

Avantageusement, pour chaque canal de transmission (k), les résultats de formation de voies sont pondérés $(540_{1,k},..,540_{p,k})$ par des coefficients complexes puis sommés, lesdits coefficients étant obtenus à partir des caractéristiques estimées $(\hat{\alpha}_{p,k},\hat{v}_{p,k})$ de propagation des différents trajets (p) du canal de transmission (k).

Selon une caractéristique de l'invention, pour chaque utilisateur k, les directions d'arrivée et les caractéristiques de propagation des différents trajets sont estimées à partir de la connaissance a priori d'un symbole transmis par ledit utilisateur.

Selon un mode de réalisation important de l'invention, la méthode de détection multi-utilisateur comprend l'itération d'un ensemble de séquences, chaque séquence d'un utilisateur de la seconde itération et des itérations suivantes opérant sur le jeu de signaux d'antennes dont les contributions des autres utilisateurs ont été éliminées à l'itération précédente.

Avantageusement, à la première itération, pour chaque utilisateur, les directions d'arrivée et les caractéristiques de propagation des différents trajets sont estimées à partir de la connaissance a priori d'au moins un symbole pilote transmis par ledit utilisateur et, aux itérations ultérieures, cette estimation est effectuée à partir d'au moins une donnée estimée et remodulée à une itération précédente en sus dudit symbole pilote.

En outre, si les caractéristiques de propagation des différents trajets sont connues a priori, la première itération peut opérer sans formation de voies, en mode omni-directionnel, la formation de voies étant appliquée dès la seconde itération.

L'invention est également définie par un dispositif de détection multi-utilisateur comprenant des moyens adaptés à mettre en oeuvre la méthode exposée ci-dessus.

Les caractéristiques de l'invention mentionnées ci-dessus, ainsi que d'autres, apparaîtront plus clairement à la lecture de la description faite en relation avec les Figs. jointes, parmi lesquelles :

La Fig. 1 représente de manière schématique un système de télécommunication DS-CDMA ;

La Fig. 2 représente de manière schématique un dispositif de détection multi-utilisateur de type PIC;

La Fig. 3 représente de manière schématique un dispositif de détection multi-utilisateur de type SIC ;

La Fig. 4 représente de manière schématique un dispositif de détection multi-utilisateur de type ZF-DF ;

La Fig. 5 représente un récepteur de type Rake utile au dispositif selon l'invention ;

La Fig. 6 représente un dispositif de détection multi-utilisateur selon un premier mode de réalisation de l'invention ;

La Fig. 7 représente un dispositif de détection multi-utilisateur selon un second mode de réalisation de l'invention ;

La Fig. 8 représente un dispositif de détection multi-utilisateur selon un troisième mode de réalisation de l'invention ;

La Fig. 9a représente un dispositif de détection multi-utilisateur selon un quatrième mode de réalisation de l'invention ;

La Fig. 9b représente de manière équivalente un dispositif de détection multi-utilisateur selon le quatrième mode de réalisation de l'invention ;

La Fig. 10 représente un dispositif de détection multi-utilisateur selon un cinquième mode de réalisation de l'invention.

L'idée générale à la base de l'invention est d'imbriquer dans un processus de détection multi-utilisateur l'estimation des coefficients complexes (incluant l'atténuation et la rotation de phase) et des directions d'arrivée des trajets de propagation. Ainsi, le processus de réjection d'interférence bénéficie d'une meilleure précision de l'estimation des contributions respectives des différents utilisateurs dans le signal reçu. Réciproquement, le processus d'estimation des coefficients complexes bénéficie de la réjection de l'interférence multi-utilisateur en opérant sur des signaux épurés.

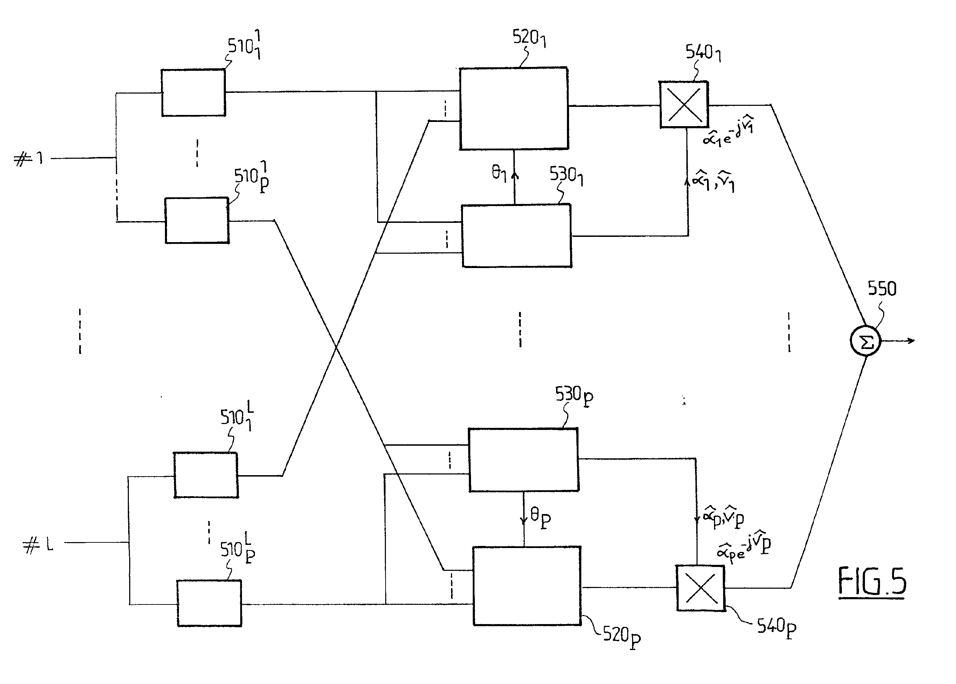

Le dispositif selon l'invention utilise un récepteur de type Rake illustré en Fig. 5. Sa particularité par rapport à un récepteur Rake conventionnel est d'intégrer une formation de faisceau selon les directions d'arrivée des différents trajets. Le dispositif selon l'invention comporte un récepteur de ce type par utilisateur, un seul récepteur ($500_k$) étant illustré en Fig. 5. Pour des raisons de simplicité de notation, les différents éléments du récepteur ($500_k$) sont dépourvus de l'indice k. Le récepteur ($500_k$) reçoit les sorties des antennes 1,..,L d'un réseau d'antennes, de préférence linéaire et uniforme bien que d'autres types de réseaux puissent également être envisagés, notamment des réseaux circulaires. Les signaux d'antennes sont filtrés par un filtrage adapté à la signature de l'utilisateur k afin de désétaler sa contribution au signal reçu . Plus précisément, chaque signal de sortie d'antenne est désétalé dans une batterie de filtres adaptés ($510^{\ell}_{1}$,...,$510^{\ell}_{P}$ OP où P est le nombre de trajets et $\ell$=1..L est l'indice de l'antenne) fournissant en sortie les signaux relatifs aux différents trajets du canal de transmission de l'utilisateur k. Les signaux correspondants à un même trajet p=1..P sont dirigés vers des moyens de formation de voies ($520_1$,..,$520_P$) ainsi que vers des estimateurs de canal et de direction d'arrivée ($530_1$,..,$530_P$).

Nous allons tout d'abord expliciter la fonction des estimateurs ($530_p$), p=1..P.

Si l'on note $x_{\ell,p,k}$ la contribution reçue par l'antenne $\ell$, $\ell$ = (1,...,$L$) attribuable à un trajet p=1..P du canal k=1..K on peut écrire:

$$x_{\ell,p,k}(t)=\alpha_{p,k}(t)e^{J\xi,\ell,p,k}.b_k(t)+n_{\ell,p,k}(t)$$

avec

$$\xi_{\ell,p,k}(t) = \nu_{p,k}(t)+(\ell-1).\varphi_{p,k}(t) = \nu_{p,k}(t)+2\pi\frac{d}{\lambda}(\ell-1)\cos(\theta_{p,k}(t))$$

où $b_k(t)$ est le symbole émis par l'utilisateur k, $n_{\ell,p,k}(t)$ est le bruit supposé blanc additif gaussien au niveau de l'antenne $l$ pour le trajet p de l'utilisateur k, incluant le bruit thermique, l'interférence multi-trajet et l'interférence multi-utilisateur, d est le pas du réseau et $\lambda$ est la longueur d'onde.

La propagation suivant le trajet p d'un utilisateur k est ainsi modélisée par un coefficient d'atténuation $\alpha_{p,k}(t)$ et une rotation de phase $\nu_{p,k}(t)$. Le déphasage total $\xi_{\ell,p,k}(t)$ résulte d'une part de la rotation de phase $\nu_{p,k}(t)$ induite sur le trajet p et d'autre part de la différence de marche entre l'antenne $\ell$ et l'antenne de référence 1 sous l'angle d'arrivée $\theta_{p,k}(t)$.

L'estimateur ($530_p$) a pour fonction d'estimer d'une part le coefficient d'atténuation $\alpha_{p,k}$ et la rotation de phase $\nu_{p,k}$ et d'autre part l'angle d'arrivée $\theta_{p,k}$. L'estimateur effectuera de préférence une estimation conjointe canal et direction d'arrivée selon la méthode exposée dans la demande de brevet française intitulée « Méthode d'estimation conjointe de canal et de direction d'arrivée » et déposée le même jour par la requérante. Le contenu de cette demande est inclus ici par référence. Ladite méthode d'estimation conjointe consiste à chercher les valeurs $\theta_{p,k}$, $\alpha_{p,k}$ et $\nu_{p,k}$ telles que la distance quadratique $D_{p,k}$ soit minimale.

$$D_{p,k} = \sum_{t=1}^{T} \sum_{\ell=1}^{L} \left| x_{\ell,p,k}(t) - \alpha \cdot e^{j\,\xi_{\ell,p,k}} \cdot b_k(t) \right|^2$$

L'estimation est effectuée en trois étapes :

**Etape 1 :** on estime $\xi_{\ell,p,k}$ en minimisant la distance quadratique $D_{\ell,p,k}$ au niveau de chaque antenne :

$$D_{\ell,p,k} = \sum_{t=1}^{T} \left| x_{\ell,p,k}(t) - \alpha \cdot e^{j\,\xi_{\ell,p,k}} \cdot b_k(t) \right|^2$$

**Etape 2 :** on estime $\theta_{p,k}$ et $\nu_{p,k}$ à partir d'une régression linéaire sur les valeurs estimées $\hat{\xi}_{\ell,p,k}$ ;

**Etape 3 :** à partir des valeurs estimées $\hat{\nu}_{p,k}$ et $\hat{\theta}_{p,k}$ on estime finalement $\alpha_{p,k}$ en minimisant la distance quadratique

$$D_{p,k} = \sum_{\ell=1}^{L} D_{\ell,p,k}$$

On obtient ainsi une valeur estimée $\hat{\alpha}_{p,k}$.

L'estimation est effectuée en parallèle pour tous les trajets p des utilisateurs k. La valeur estimée $\hat{\theta}_{p,k}$ est fournie au formateur de voie ($520_p$) de manière à ce qu'il pointe son faisceau de réception dans la direction d'arrivée du trajet p. La formation de voie est classique et ne sera donc pas décrite plus avant. Dans une variante de réalisation non représentée, chaque formateur de voie ($520_p$) reçoit également les valeurs estimées $\hat{\theta}_{p',k}$ fournies par les autres estimateurs ($530_{p'}$), p'≠p, des trajets p' du même utilisateur. Ceci permet au formateur de voie ($520_p$) de placer des zéros dans le diagramme de réception pour les directions concernées ($\theta_{p'k}$,p'≠p) de manière à mieux séparer les signaux reçus des différents trajets. Dans une variante également non représentée, chaque formateur de voie ($520_p$) d'un utilisateur k reçoit les valeurs estimées $\hat{\theta}_{p',k'}$ (k'≠k) de toutes les directions d'arrivée des autres utilisateurs de manière à pouvoir également placer des zéros dans ces directions.

Les valeurs estimées $\hat{\alpha}_{p,k}$ et $\hat{\nu}_{p,k}$ sont transmises à un multiplicateur complexe ($540_p$) qui multiplie le signal de sortie du formateur de voie ($530_p$) par le coefficient complexe $\hat{\alpha}_{p,k} \cdot e^{-j\hat{\nu}_{p,k}}$. Les sorties des P multiplicateurs sont alors sommées dans un sommateur (550) pour fournir une sortie de type MRC (Maximum Ratio Combining). L'opération effectuée par le récepteur ($500_k$) est alors un filtrage adapté. Si en lieu et place de la sommation, un simple maximum des valeurs en sortie des différentes branches est calculé, l'expression de « filtrage adapté » n'est plus appropriée (ce n'est plus un filtrage). Nous désignerons cependant par la suite le récepteur ($500_k$), récepteur « de type Rake » quel que soit le type de traitement en sortie des branches. Dans tous les cas, le signal de sortie $S_k$ représente une estimation de la contribution de l'utilisateur k au signal reçu par le réseau.

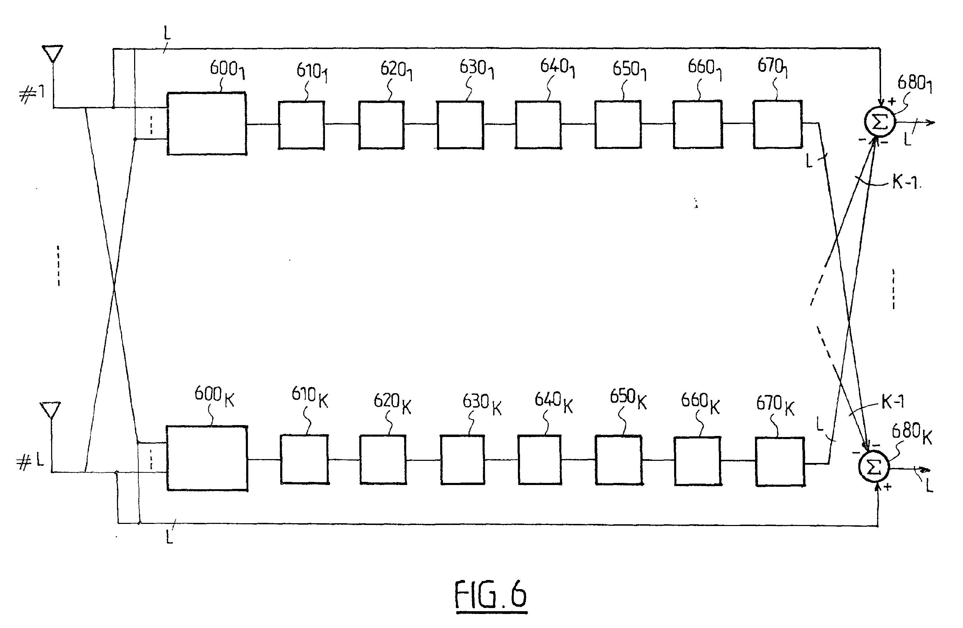

La Fig. 6 représente un dispositif de détection multi-utilisateur selon un premier exemple de réalisation de l'invention. L'interférence multi-utilisateur y est éliminée selon un mode parallèle.

Les sorties des antennes 1..L du réseau sont toutes reliées à une batterie de récepteurs de type Rake ($600_1$,.., $600_K$) dont la structure a été décrite en Fig. 5. Les signaux obtenus en sortie des récepteurs sont ensuite soumis à une séquence d'étapes de traitement comprenant : une étape de décision souple ou dure au moyen des détecteurs ($610_1$,..,$610_K$) fournissant sous forme souple ou dure les données transmises par les différents utilisateurs, suivie d'une étape de désentrelacement ($620_1$,...,$620_K$) des données ainsi obtenues, une étape de décodage/encodage canal ($630_1$,...,$630_K$) et ($640_1$,...,$640_K$) fournissant une estimation plus fiable des données transmises. Avantageusement, cette opération est effectuée au moyen d'un décodage à entrées et à sorties souples (SISO pour Soft Input Soft Output). Le réencodage n'est pas nécessaire si l'on récupère directement les données encodées en sortie de décodage. Par exemple, si l'on utilise en ($630_1$,...,$630_K$) un algorithme de type SOVA (Soft Output Viterbi Algorithm) les données encodées peuvent être récupérées directement le long du chemin de maximum de vraisemblance. Les données ainsi estimées sont ensuite à nouveau entrelacées en ($650_k$) avant d'être remodulées et les symboles réétalés spectralement en ($660_k$) par la signature de l'utilisateur k. Bien entendu, si le décodage utilisé est à valeurs souples, la remodulation sera également « souple » au sens où elle fournira des symboles résultant de la pondération de symboles de la constellation, pondérés par leurs probabilités a posteriori respectives. Chaque symbole réétalé $s_k$ est ensuite filtré par un filtre ($670_k$) modélisant le canal de transmission k et prenant en compte la géométrie du réseau d'antennes. Plus précisément, le filtre ($670_k$) calcule les expressions suivantes :

$$x_{\ell,k} = \sum_{p=1}^{P} \hat{s}_k . \alpha_{p,k} . e^{j\xi_{\ell,p,k}} \quad \text{pour} \quad \ell = 1..L$$

où $\alpha_{p,k}$ et $\xi_{\ell,p,k}$ sont les valeurs respectives des coefficients d'atténuation et des déphasages obtenues par le module d'estimation conjointe du récepteur ($600_k$).

On retranche ensuite en ($680_k$), pour chaque utilisateur k, au L-uplet de signaux ($x_l$) reçus par les L antennes, le L-uplet

$$\left( \sum_{k' \neq k} \overline{x_{\ell,k'}} \right)$$

pour éliminer la contribution due aux autres utilisateurs. On obtient ainsi K L-uplets de signaux d'antennes partiellement débarrassés de l'interférence multi-utilisateur. Le processus d'élimination peut être itéré en répétant la séquence ($600_k$)..($670_k$) à partir de ces signaux et en retranchant à chaque fin d'itération, aux signaux ($x_l$) reçus par les antennes, les contributions nouvellement calculées. Chaque séquence d'un utilisateur de la seconde itération et des itérations suivantes opère sur un jeu (L-uplet) de signaux d'antennes dont les contributions des autres utilisateurs ont été éliminées à l'itération précédente. L'estimation des symboles transmis par les différents utilisateurs gagne ainsi en fiabilité au fil des itérations.

Il est à noter que les opérations de désentrelacement, décodage/encodage canal, et entrelacement sont optionnelles (les blocs ($620_k$, $630_k$, $640_k$, $650_k$ sont alors absents). Le réétalement spectral peut s'appliquer directement au symbole estimé. Toutefois, l'utilisation d'un décodage canal (avec bien entendu codage canal correspondant à l'émission) permet d'abaisser le taux d'erreurs et donc d'améliorer la fiabilité de l'estimation de l'interférence et, par suite, des symboles transmis.

En outre, disposant des décisions sur les bits codés ou mieux, des fiabilités sur les bits codés, on peut utiliser ces valeurs dures ou souples, après les avoir remodulées, comme nouveaux symboles pilotes pour l'itération suivante. Si l'on disposait initialement par exemple de 40 symboles pilotes répartis parmi 200 symboles codés, on dispose alors dès la deuxième itération de 240 symboles pilotes. Le nombre accru de pilotes permet d'améliorer encore la qualité de l'estimation.

Enfin, si les caractéristiques des canaux sont déjà connues, c'est-à-dire si les valeurs $\alpha_{p,k}$ et $\xi_{\ell,p,k}$ sont connues, on peut se passer de l'emploi des pilotes pour l'estimation des directions d'arrivées. En effet, la première itération peut opérer avec un diagramme de réseau d'antennes omni-directionnel (c'est-à-dire sans formation de voies) auquel cas le calcul des $\theta_{p,k}$ n'est pas nécessaire. On dispose ensuite des valeurs du décodage pour effectuer ce calcul dès la seconde itération et appliquer une formation de voies à partir de ces valeurs.

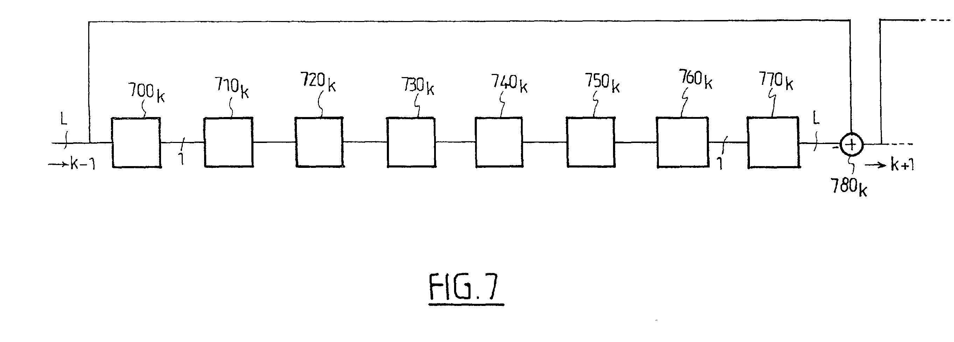

La Fig. 7 illustre un dispositif de détection multi-utilisateur selon un second exemple de réalisation de l'invention.

A la différence de la Fig. 6, l'élimination de l'interférence est ici réalisée en une série de K étapes, K étant le nombre d'utilisateurs. Les contributions des différents utilisateurs dans les signaux reçus sont ordonnées par ordre de puissance décroissante. Pour chaque utilisateur, on sommera par exemple les modules au carré des sorties des filtres adaptés de l'utilisateur reliés aux différentes antennes et l'on comparera les sommes obtenues.

Pour simplifier le schéma un seul étage a été représenté, chaque étage effectuant une étape d'élimination. Chaque étage comporte en entrée un récepteur de type Rake ($700_k$) tel que décrit en Fig. 5. Le récepteur du premier étage reçoit les L signaux d'antennes et le récepteur d'un étage ultérieur reçoit les L signaux de sortie de l'étage précédent. En sortie du récepteur, on procède comme déjà décrit pour la Fig. 6 à une décision souple ou dure ($710_k$), un désentrelacement ($720_k$), un décodage/réencodage canal ($730_k$) et ($740_k$), un entrelacement ($750_k$), une remodulation et un réétalement ($760_k$) des symboles estimés puis un filtrage de canal ($770_k$). Les filtres ($770_k$) sont identiques au filtres ($670_k$) déjà décrits. Les L signaux de sortie de ($770_k$) sont ensuite soustraits en ($780_k$) aux L signaux d'entrée de l'étage k pour fournir les L signaux d'entrée de l'étage k+1. On élimine ainsi successivement les contributions des différents utilisateurs en commençant par celles qui créent les plus fortes interférences. Les sorties des filtres de canal ($770_k$) des différents étages 1..K peuvent être utilisées, comme celles des filtres de canal ($670_k$) de la Fig. 6, afin de régénérer, pour chaque utilisateur k, sa contribution aux signaux d'antennes, sous la forme d'un L-uplet ($x_{\ell,k}$). Les contributions des différents utilisateurs sont soustraites une à une par les sommateurs ($780_k$) des différents étages.

On peut envisager de faire suivre une phase d'élimination série (Fig. 7) par une phase l'élimination parallèle (Fig. 6). Plus généralement, on peut grouper les canaux par « paquets » correspondant à des utilisateurs de même région spatiale ou de puissances voisines, on peut traiter les interférences entre paquets tout d'abord, puis les interférences entre utilisateurs de même paquet ensuite. Le traitement inter-paquet peut être d'un type (série ou parallèle) distinct de celui intra-paquet.

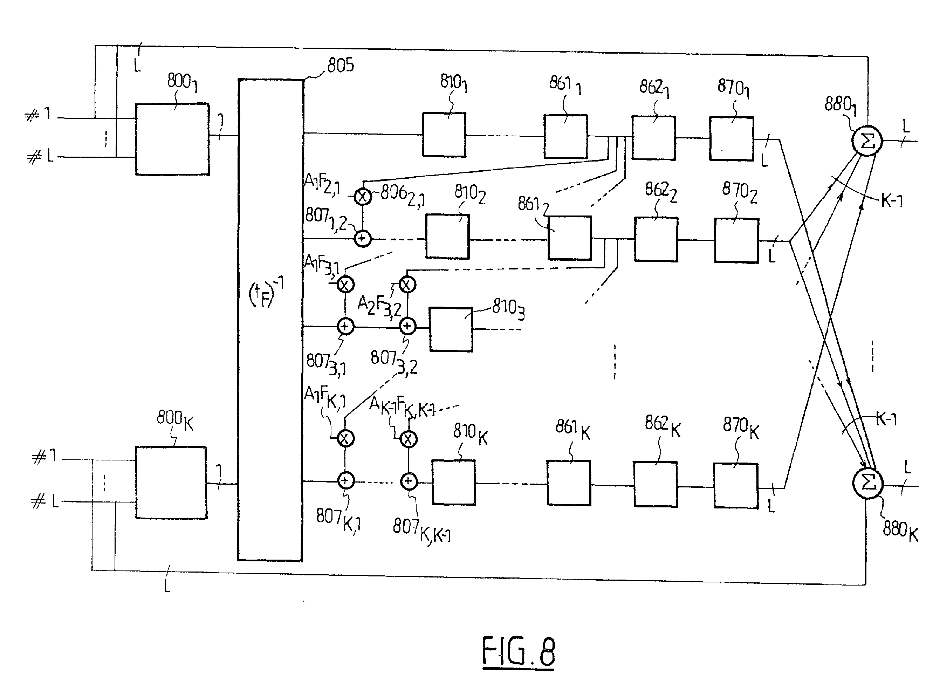

La Fig. 8 représente un dispositif de détection multi-utilisateur selon un troisième exemple de réalisation de l'invention.

Ce mode de réalisation utilise le principe d'élimination ZF-DF exposé en introduction. Les sorties des antennes 1..L sont reliées à une batterie de K récepteurs de type Rake ayant la structure décrite en Fig. 5. Les signaux de sortie des récepteurs sont soumis à une multiplication matricielle (805) par la matrice $(F^T)^{-1}$ où F est la matrice triangulaire inférieure obtenue par décomposition de Cholesky de la matrice de corrélation R des signatures des différents utilisateurs ($R=F^T.F$). Chaque ligne de sortie de la multiplication matricielle comprend une série de modules ($810_k$) à ($870_k$) ayant les mêmes fonctions que les modules ($710_k$) à ($770_k$) correspondants. Le module ($860_k$) a été ici représenté en deux parties à savoir ($861_k$) pour la fonction de modulation et ($862_k$) pour la fonction de réétalement spectral. Le signal de sortie d'un module d'entrelacement ($850_k$) est soustrait aux entrées respectives des étages ultérieurs k', k'>k en ($807_{k',k}$), après multiplication en ($806_{k',k}$) par le coefficient $A_{k}.F_{k,k'}$. Le choix de la sortie de ($861_k$) et non de la sortie de ($810_k$) remodulée comme dans la méthode ZF-DF conventionnelle permet de tirer avantageusement profit du décodage canal pour affiner l'élimination d'interférence à l'étage suivant. On obtient en sortie de chaque filtre de canal ($870_k$) un L-uplet ($x_{\ell,k}$). Comme dans la méthode d'élimination parallèle, on retranche en ($880_k$), pour chaque utilisateur k, à chaque L-uplet de signaux de sortie d'antenne ($x_l$) le L-uplet

$$\left( \sum_{k' \neq k} x_{\ell,k} \right)$$

pour éliminer la contribution due aux utilisateurs autres que k. On procède donc à une élimination de type série et une élimination de type parallèle. Comme dans la méthode d'élimination parallèle, le processus décrit peut être itéré.

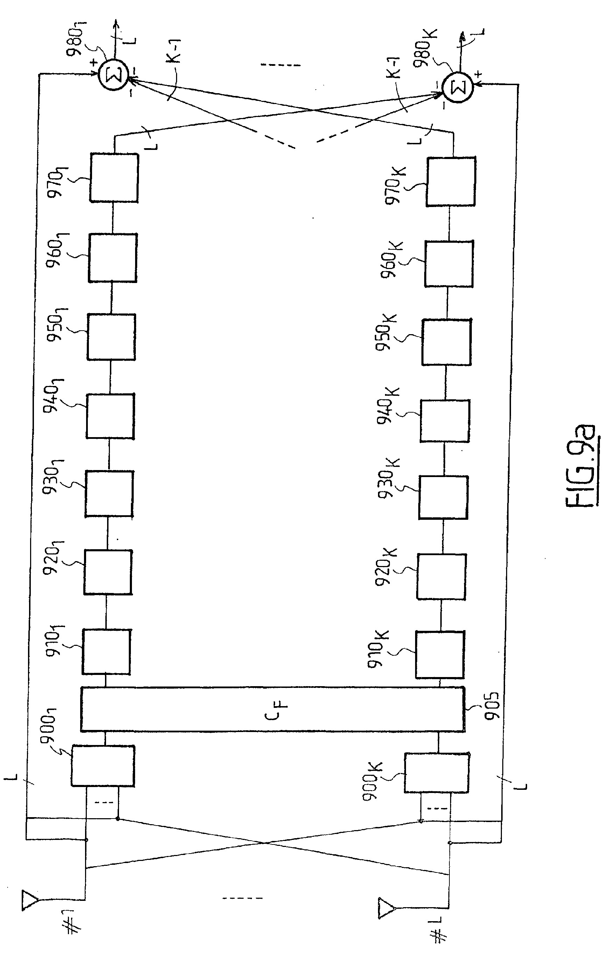

La Fig. 9a représente un dispositif de détection multi-utilisateur selon un quatrième mode de réalisation de l'invention.

Ce mode de réalisation étend le mode d'élimination parallèle au sens où il intègre désormais une fonction de « multi-égalisation » que nous expliciterons plus loin. Les numéros de référence indiqués sont les translatés de ceux de la Fig. 6 lorsqu'ils correspondent à des fonctions identiques. Le dispositif représenté en Fig. 9a diffère néanmoins de celui de la Fig. 6 en ce qu'il comprend un filtre linéaire (905) en amont des modules de décision ($910_k$). Ce filtrage a pour but de prendre en compte les sorties des récepteurs de type Rake ($900_k$) à différents instants d'échantillonnage dans l'élimination de l'interférence. Le filtre (905) est un filtre temporel linéaire transverse qui joue un rôle équivalent à celui d'un égaliseur linéaire transverse classique lorsqu'un seul utilisateur est considéré. A la différence de ce dernier cependant, le filtre (905) est un filtre matriciel qui opère sur des vecteurs de taille K et utilise donc des matrices de taille KxK au lieu de coefficients scalaires, le nombre de telles matrices correspondant au nombre de prises temporelles du filtre. Les coefficients diagonaux des différentes matrices permettent l'égalisation proprement dite alors que les coefficients hors des diagonales permettent de prendre en compte les réponses temporelles des différents canaux dans la réjection de l'interférence entre utilisateurs. Tout comme son homologue mono-utilisateur le filtre transversal (905) peut être optimisé par une technique connue comme celle de forçage à zéro (Zero Forcing ou ZF) ou de minimisation de l'erreur quadratique moyenne (Minimum Mean Square Error ou MMSE).

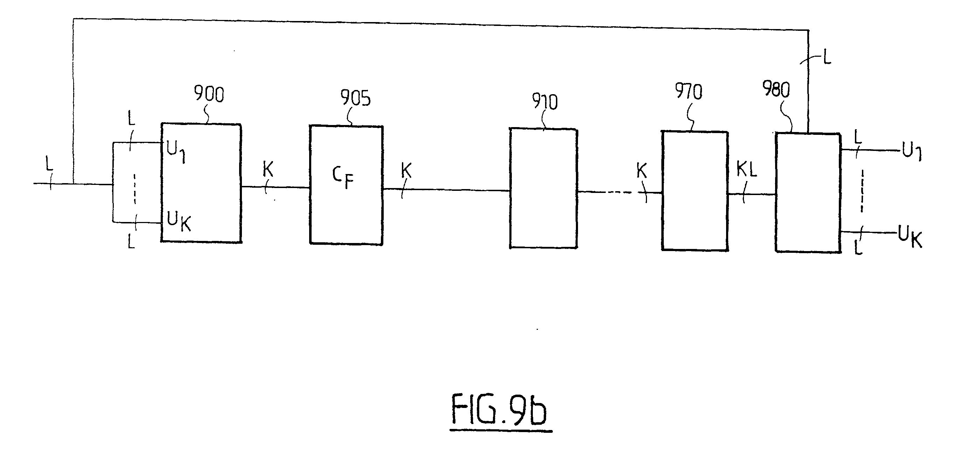

La Fig. 9b représente de manière équivalente le dispositif de la Fig. 9a en faisant ressortir le caractère de traitement vectoriel des différents modules (900) à (980) chaque module intégrant respectivement les modules ($900_1$,..., $900_K$),...($980_1$,...,$980_K$) de la Fig. 9a (par exemple, le module (900) est une batterie de récepteurs de type Rake). Le filtre matriciel (905) reste bien entendu inchangé.

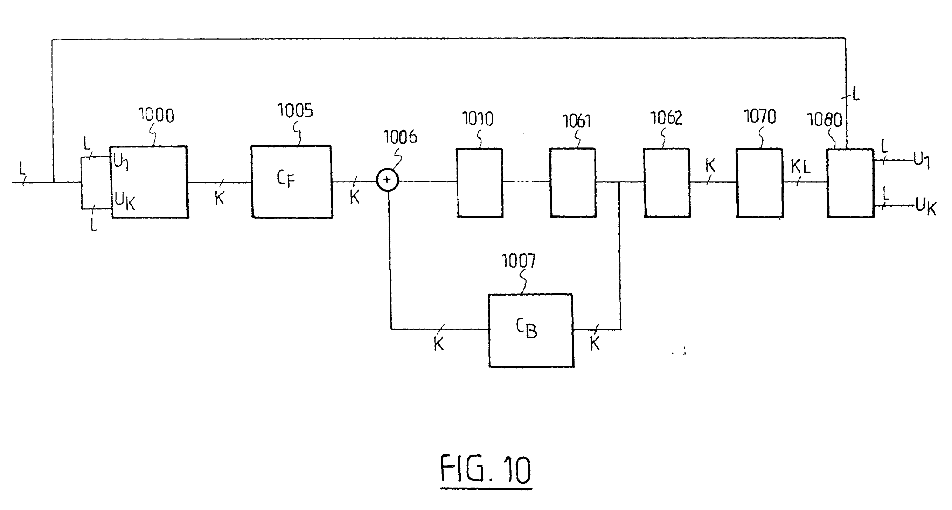

La Fig. 10 représente un dispositif de détection multi-utilisateur selon un cinquième mode de réalisation de l'invention.

Ce mode de réalisation transpose la technique d'égalisation par retour de décision (Decision Feedback ou DF) au contexte multi-utilisateur. Les modules (1000),(1010),...(1080) sont des modules identiques aux modules (900), (910),...,(980) de la Fig. 9, chaque module opérant, on l'a dit, sur un vecteur à K composantes. Le module (1060) a été ici représenté en deux parties (1061) et (1062) pour séparer la fonction de modulation (1061) de celle d'étalement spectral (1062). Le dispositif comprend un filtre transverse précurseur (1005) identique au filtre (905) et un filtre postcurseur (1007) filtrant la sortie réentrelacée et remodulée du module (1061). La sortie du filtre postcurseur est soustraite (1006) à l'entrée du module de décision (1010). L'ensemble constitué par le filtre transverse (1005) et le filtre de contre-réaction (1007) peut être là aussi optimisé selon une technique connue, ZF ou MMSE par exemple. Dans le premier cas, ce mode de réalisation peut être vu comme une généralisation du mode ZF-DF exposé en Fig. 8.

Le filtre postcurseur (1007) doit être causal de manière à assurer que l'on n'ait pas à retrancher la contribution d'échantillons temporels non encore disponibles au moment de la soustraction à l'échantillon courant. Ceci peut notamment imposer des contraintes sur la longueur de l'entrelacement. Alternativement, le filtre postcurseur (1007) filtrera la sortie du module de décision (1010) remodulée ce qui permettra de relaxer la contrainte de causalité au prix toutefois de l'abandon du bénéfice du décodage canal dans l'évaluation de l'interférence inter-symbole par le filtre postcurseur.

Les modes de réalisation illustrés en Fig. 9 et 10 utilisent tous deux une « multi-égalisation » dérivée de l'égalisation mono-utilisateur symbole par symbole. Il est cependant clair pour l'homme du métier que l'invention est également susceptible de généralisation à la famille des techniques d'égalisation à estimation de séquences de symboles, à savoir MLSE (Maximum Likelihood Sequence Estimation), DDFSE (Delayed Decision Feedback Sequence Estimation), RSSE (Reduced State Sequence Estimation) etc. Toutes ces techniques sont également transposables au moyen de l'invention à la situation multi-utilisateur.

Bien que l'invention ait été essentiellement illustrée, pour des raisons de commodité au moyen de modules exécutant certaines fonctions, il est clair cependant que toutes ou une partie seulement de ces fonctions peuvent être exécutées par un processeur programmé à cet effet.

## Revendications

1. Méthode de détection multi-utilisateur avec élimination d'interférence entre utilisateurs, chaque utilisateur transmettant des données modulées sous forme de symboles sur un canal de transmission, chaque canal de transmission ($k$) comprenant au moins un trajet de propagation ($p$) et chaque trajet de propagation arrivant sur un réseau d'antennes ($\ell$) de réception selon une direction d'arrivée $\theta_{p,k}$, la méthode comprenant au moins une séquence d'étapes pour chaque utilisateur, **caractérisée en ce que** chaque séquence comprend :

   (a) une étape d'estimation du signal transmis ($500_k, 600_k, 700_k, 800_k, 900_k, 900, 1000$) par l'utilisateur à partir des signaux d'antennes, ladite étape effectuant une estimation ($530_p$) de la direction d'arrivée ($\theta_{p,k}$) et de caractéristiques ($\alpha_{p,k}, v_{p,k}$) de propagation de chaque trajet ($p$) du canal de transmission ($k$) à partir desdits signaux ;
   (b) une étape d'estimation des données transmises ($610_k, 710_k, 810_k, 910_k, 910, 1010$) par l'utilisateur à partir de ladite estimation du signal transmis ;
   (c) une étape d'estimation de la contribution ($670_k, 770_k, 870_k, 970_k, 970, 1070$) de l'utilisateur aux signaux reçus par les différentes antennes à partir des données estimées à l'étape (b) et de la direction d'arrivée ainsi que les caractéristiques de propagation estimées à l'étape (a) ;
   (d) une étape d'élimination d'interférence ($680_{k'}, 780_k, 880_{k'}, 980_{k'}, 980, 1080$) soustrayant aux signaux d'antennes la contribution estimée à l'étape (c) pour obtenir des signaux d'antennes épurés ; les signaux d'antennes épurés fournis par au moins une première séquence étant utilisés comme signaux d'antennes par au moins une seconde séquence.

2. Méthode de détection multi-utilisateur selon la revendication 1, **caractérisée en ce que**, pour un utilisateur donné k, l'interférence est éliminée en soustrayant ($680_k, 880_k$) aux signaux d'antennes les contributions de tous les autres utilisateurs.

3. Méthode de détection multi-utilisateur selon la revendication 1, **caractérisée en ce que** les utilisateurs sont classés par ordre de puissance reçue et que l'interférence est éliminée en soustrayant ($780_k$) l'une après l'autre les contributions des différents utilisateurs en commençant par les utilisateurs de plus fortes puissances reçues.

4. Méthode de détection multi-utilisateur selon l'une des revendications précédentes, **caractérisée en ce que**, pour chaque utilisateur k, ladite séquence comprend après l'étape d'estimation desdites données ($61 0_k, 710_k, 810_k, 910_k, 910, 1010$), une étape de désentrelacement ($620_k, 720_k, 820_k, 920_k, 920, 1020$) suivie d'une étape de décodage canal ($630_k, 730_k, 830_k, 930_k, 930, 1030$), de codage canal ($640_k, 740_k, 840_k, 940_k, 940, 1040$) et d'une étape d'entrelacement ($650_k, 750_k, 850_k, 950_k, 950, 1050$) desdites données.

5. Méthode de détection multi-utilisateur selon l'une des revendications précédentes, **caractérisée en ce que**, pour chaque utilisateur k, ladite séquence comprend préalablement à l'étape d'estimation de la contribution ($670_k, 770_k, 870_k, 970_k, 970, 1070$) de l'utilisateur aux signaux reçus, une étape de modulation et de réétalement spectral ($660_k, 760_k, 860_k, 960_k, 960, 1060$) au moyen de la signature ayant servi à étaler spectralement les symboles dudit utilisateur.

6. Méthode de détection multi-utilisateur selon l'une des revendications précédentes, **caractérisée en ce que**, les estimations des signaux transmis des utilisateurs étant considérées comme un vecteur d'estimations à K composantes où K est le nombre d'utilisateurs, ledit vecteur est soumis à un filtrage matriciel transverse ($905, 1005$) avant l'étape de décision ($910, 1010$).

**7.** Méthode de détection multi-utilisateur selon la revendication 6, **caractérisée en ce que**, les données estimées et remodulées des utilisateurs étant considérés comme un vecteur de symboles à K composantes, ledit vecteur de symboles est soumis à un filtrage matriciel postcurseur (1007) et la sortie de ce filtrage est soustraite, vecteur à vecteur, à la sortie du filtrage matriciel transverse (1005).

**8.** Méthode de détection multi-utilisateur selon les revendications 4, 5 et 6, **caractérisée en ce que**, les symboles issus de l'étape de modulation (1061) étant considérés comme un vecteur de symboles à K composantes, ledit vecteur de symboles est soumis à un filtrage matriciel postcurseur (1007) et la sortie de ce filtrage est soustraite, vecteur à vecteur, à la sortie du filtrage matriciel transverse (1005).

**9.** Méthode de détection multi-utilisateur selon les revendications 2 et 4, **caractérisée en ce que** les estimations des signaux transmis par les différents utilisateurs sont soumis à une multiplication matricielle (805) par une matrice $(F^T)^{-1}$ avant l'étape d'estimation des données, où $F^T$ est la transposée de la matrice triangulaire inférieure F obtenue par décomposition de Cholesky de la matrice de corrélation des signatures ayant servi à étaler spectralement les symboles desdits utilisateurs, l'interférence étant éliminée, pour un utilisateur k donné, dans une première phase, en soustrayant ($807_{k',k}$) de la $k^{ième}$composante du produit matriciel la somme

$$\sum_{i=1}^{k-1}$$

$A_i.F_{k,i}.\hat{s}_i$ où $A_i$ est l'amplitude du signal transmis par l'utilisateur i, $\hat{s}_i$ est le symbole obtenu par remodulation ($861_k$) des données estimées de l'utilisateur i et $F_{k,i}$ le (k,i) ième élément de la matrice $F$, l'estimation des données transmises par l'utilisateur k étant effectuée à partir de la $k^{ième}$composante après ladite soustraction et, dans une seconde phase, en soustrayant ($880_k$) aux signaux reçus par les différentes antennes, la somme des contributions de tous les autres utilisateurs.

**10.** Méthode de détection multi-utilisateur selon l'une des revendications précédentes, **caractérisée en ce que**, pour chaque utilisateur k, l'étape d'estimation du signal transmis par l'utilisateur, sur le canal de transmission (*k*), comprend une formation de voies ($520_1$,..,$520_P$) dans les directions d'arrivée des différents trajets de propagation (p) dudit canal.

**11.** Méthode de détection multi-utilisateur selon la revendication 10, **caractérisée en ce que** la formation de voie ($520_p$) pour un trajet de propagation d'un canal de transmission place des zéros dans les directions d'arrivée des autres trajets de propagation du même canal de transmission.

**12.** Méthode de détection multi-utilisateur selon la revendication 11, **caractérisée en ce que** la formation de voie ($520_{p,k}$) pour un trajet de propagation (*p*) d'un canal de transmission (*k*) place des zéros dans les directions d'arrivée de tous les trajets de propagation des autres canaux de transmission.

**13.** Méthode de détection multi-utilisateur selon l'une des revendications 10 à 12, **caractérisée en ce que**, pour chaque canal de transmission (*k*), les résultats de formation de voies sont pondérés ($540_{1,k}$,..,$540_{P,k}$) par des coefficients complexes puis sommés, lesdits coefficients étant obtenus à partir des caractéristiques estimées ($\hat{\alpha}_{p,k}$,$\hat{v}_{p,k}$) de propagation des différents trajets (*p*) du canal de transmission (*k*).

**14.** Méthode de détection multi-utilisateur selon l'une des revendications précédentes, **caractérisée en ce que**, pour chaque utilisateur k, les directions d'arrivée et les caractéristiques de propagation des différents trajets sont estimées à partir de la connaissance a priori d'un symbole transmis par ledit utilisateur.

**15.** Méthode de détection multi-utilisateur selon la revendication 2 ou bien 4 à 14 en dépendance avec 2, **caractérisée en ce qu'**elle comprend l'itération d'un ensemble de séquences, chaque séquence d'un utilisateur de la seconde itération et des itérations suivantes opérant sur le jeu de signaux d'antennes dont les contributions des autres utilisateurs ont été éliminées à l'itération précédente.

**16.** Méthode de détection multi-utilisateur selon la revendication 15, **caractérisée en ce que**, à la première itération, pour chaque utilisateur, les directions d'arrivée et les caractéristiques de propagation des différents trajets sont estimées à partir de la connaissance a priori d'au moins un symbole pilote transmis par ledit utilisateur et qu'aux itérations ultérieures cette estimation est effectuée à partir d'au moins une donnée estimée et remodulée à une itération précédente en sus dudit symbole pilote

**17.** Méthode de détection multi-utilisateur selon les revendications 10 et 15, **caractérisée en ce que**, les caractéristiques de propagation des différents trajets étant connues a priori, la première itération opère sans formation de voies, en mode omni-directionnel, la formation de voies étant appliquée dès la seconde itération.

**18.** Dispositif de détection multi-utilisateur **caractérisé en ce qu'**il comprend des moyens adaptés à mettre en oeuvre la méthode selon l'une des revendications précédentes.

FIG.1

FIG.2

$$\hat{S}_k$$

FIG.3

FIG. 4

FIG.5

EP 1 184 997 A1

FIG.6

FIG.7

FIG.8

FIG.9a

FIG.9b

FIG. 10

EP 1 184 997 A1

| Catégorie | Citation du document avec indication, en cas de besoin, des parties pertinentes | Revendication concernée | CLASSEMENT DE LA DEMANDE (Int.Cl.7) |
|---|---|---|---|
| D,X | REED M C ET AL: "ITERATIVE MULTIUSER DETECTION USING ANTENNA ARRAYS AND FEC ON MULTIPATH CHANNELS" IEEE JOURNAL ON SELECTED AREAS IN COMMUNICATIONS,IEEE INC. NEW YORK,US, vol. 17, no. 12, décembre 1999 (1999-12), pages 2082-2089, XP000920304 ISSN: 0733-8716 | 1,2,10, 15,17,18 | H04B1/707 |
| Y | * le document en entier * | 3-9,14, 16 | |
| D,Y | MOSHAVI S: "MULTI-USER DETECTION FOR DS-CDMA COMMUNICATIONS" IEEE COMMUNICATIONS MAGAZINE,US,IEEE SERVICE CENTER. PISCATAWAY, N.J, vol. 34, no. 10, 1 octobre 1996 (1996-10-01), pages 124-136, XP000694489 ISSN: 0163-6804 * le document en entier * | 3-9 | |
| Y | KHALAJ B H ET AL: "Spatio-temporal channel estimation techniques for multiple access spread spectrum systems with antenna arrays" ICC 95 SEATTLE. COMMUNICATIONS - GATEWAY TO GLOBALIZATION. 1995 IEEE INTERNATIONAL CONFERENCE ON COMMUNICATIONS (CAT. NO.95CH35749), PROCEEDINGS IEEE INTERNATIONAL CONFERENCE ON COMMUNICATIONS ICC 95, SEATTLE, WA, USA, 18-22 JUNE 1995, pages 1520-1524 vol.3, XP002168234 1995, New York, NY, USA, IEEE, USA ISBN: 0-7803-2486-2 | 14,16 | DOMAINES TECHNIQUES RECHERCHES (Int.Cl.7) H04B |
| A | * le document en entier * | 1,10-13, 17,18 | |

-/--

Le présent rapport a été établi pour toutes les revendications

| Lieu de la recherche | Date d'achèvement de la recherche | Examinateur |
|---|---|---|
| LA HAYE | 4 janvier 2002 | Amadei, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

23

**Office européen des brevets**

## RAPPORT DE RECHERCHE EUROPEENNE

Numéro de la demande

EP 01 40 2235

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 978 951 A (LUCENT TECHNOLOGIES INC) 9 février 2000 (2000-02-09) * abrégé; revendications 1-37 * * page 2, ligne 1 - page 3, ligne 34 * | 1-18 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 4 janvier 2002 | Amadei, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

ANNEXE AU RAPPORT DE RECHERCHE EUROPEENNE
RELATIF A LA DEMANDE DE BREVET EUROPEEN NO.

EP 01 40 2235

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

04-01-2002

| Document brevet cité au rapport de recherche | Date de publication | Membre(s) de la famille de brevet(s) | Date de publication |
|---|---|---|---|
| EP 0978951 A | 09-02-2000 | US 6301293 B1 | 09-10-2001 |
| | | AU 4245199 A | 24-02-2000 |
| | | BR 9902994 A | 01-08-2000 |
| | | CN 1247417 A | 15-03-2000 |
| | | EP 0978951 A2 | 09-02-2000 |
| | | JP 2000115028 A | 21-04-2000 |

EPO FORM P0460

Pour tout renseignement concernant cette annexe : voir Journal Officiel de l'Office européen des brevets, No.12/82